# EUROPEAN PATENT APPLICATION

(11) **EP 1 661 950 A1**
(43) Date of publication of application: **31.05.2006**
(21) Application number: 04771854.9
(22) Date of filing: 19.08.2004
(51) Int. Cl.: C08L 61/06

(54) **MOLDING MATERIAL COMPRISING PHENOL RESIN AND SLIDING PARTS MADE FROM RESIN**

(30) Priority: 22.08.2003 JP 2003298117; 15.06.2004 JP 2004176348
(71) Applicant: Asahi Organic Chemicals Industry Co., Ltd., Nobeoka-shi, Miyazaki 882-0032 (JP)
(72) Inventor: Kodama, T., ASAHI ORGANIC CHEM. Ind. Co., Ltd., Nobeoka-shi, Miyazaki 8820032 (JP); Miyata, K., ASAHI ORGANIC CHEM. Ind. Co, Ttd., Nobeoka-shi, Miyazaki 8820032 (JP); ASAI, K., ASAHI ORGANIC CHEM. Ind. Co, Ltd., Nobeoka-shi, Miyazaki 8820032 (JP)
(74) Representative: Blake, John Henry Francis
(86) International application number: PCT/JP2004/011893
(87) International publication number: WO 2005/019338

(57) **Abstract**

A phenolic resin molding material, comprising blending 350 to 900 parts by mass of an inorganic filler with 100 parts by mass of a phenolic novolakin that a total content of a monomeric phenol and a dimeric phenol is 10% or less when measured by the area method of gel filtration chromatography and a degree of dispersion (Mw/Mn) of a weight-average molecular weight (Mw) and a number-average molecular weight (Mn) is 1.1 to 3.0 when measured by gel filtration chromatography, and excelling in moldability, heat resistance, dimensional accuracy and mechanical strength.

## Description

### Technical Field

The present invention relates to a phenolic resin molding material which is suitable as an alternative to automobile parts and other various types of metallic parts.

### Background Art

The phenolic resin molding material is being used extensively in various fields as a material having heat resistance, dimensional accuracy, abrasion resistance, mechanical strength and cost in good balance. But, it is particularly heavily demanded in the automobile industry in these years that transmission parts, parts near the engine and brakes and the like used in a high-temperature atmosphere are replaced with plastic. And, the conventional phenolic resin molding material is now being used at its limit of performance.

Particularly, to replace, for example, the brake pistons, engine oil pump valves and other metallic parts near the engine and brakes with a resin, the resin is required to have improved heat resistance, dimensional accuracy and abrasion resistance, and a reduction in resin amount is effective means to meet the requirement. But, the reduction in resin amount involves degradation in moldability. Therefore, a material satisfying the moldability and the properties such as heat resistance, dimensional accuracy, abrasion resistance and mechanical strength simultaneously is being demanded.

Phenolic novolak being used as a conventional phenolic resin molding material is generally resulting from a reaction between a phenol and an aldehyde in the presence of an acid catalyst such as oxalic acid and contains a large amount of a low-molecular weight component mainly containing an unreacted a monomeric phenol. Therefore, it has disadvantages in moldability that gas tends to be produced when molding, mold clouding occurs, and a mold releasing property becomes poor.

To solve such problems, there is proposed, for example, a phenolic resin molding material using a phenolic novolak having less unreacted phenol obtained by a condensation reaction between a phenol and an aldehyde with oxycarboxylic acid used as a catalyst (Patent Literature 1) . This molding material has been solved the disadvantage of mold clouding but its mechanical strength and heat resistance have not been improved satisfactorily. Therefore, there are demands for a phenolic resin molding material which satisfies the moldability, heat resistance, dimensional accuracy and mechanical strength, and also other properties such as abrasion resistance depending on usages.

Patent Literature 1 Japanese Patent Laid-Open Publication No. HEI 8-59769

### Disclosure of the Invention

### Problems to be solved by the Invention

The present invention has been achieved in view of the above-described problems and provides a phenolic resin molding material excelling in moldability, heat resistance, dimensional accuracy and mechanical strength.

The present invention also provides a phenolic resin molding material excelling in abrasion resistance as well as moldability, heat resistance, dimensional accuracy and mechanical strength.

### Means for solving the Problems

The present inventors have made a devoted study in order to remedy the above-described problems and achieved the present invention by finding that a target molding material can be obtained by blending phenolic novolak, which has a small amount of a monomeric phenol and a dimeric phenol and has a narrow molecular weight distribution, with an inorganic filler at a specified ratio.

Specifically, the phenolic resin molding material of the present invention comprises blending 350 to 900 parts by mass of an inorganic filler with 100 parts by mass of phenolic novolak in that a total content of a monomeric phenol and a dimeric phenol is 10% or less measured by the area method of gel filtration chromatography and a degree of dispersion (Mw/Mn) of a weight-average molecular weight (Mw) and a number-average molecular weight (Mn) is 1.1 to 3.0 when measured by gel filtration chromatography.

### Effects of the Invention

The phenolic resin molding material of the present invention has outstanding moldability, heat resistance, dimensional accuracy and mechanical strength. Therefore, molded parts formed of this molding material are favorably used as alternatives to automobile parts and various types of metallic parts which are required to have heat resistance and dimensional accuracy.

Especially, the phenolic resin molding material having a fibrous filler blended as an inorganic filler of the present invention has good moldability regardless of the reduction in resin amount and also has outstanding heat resistance, dimensional accuracy, mechanical strength and abrasion resistance. Especially, the abrasion resistant inorganic fibrous filler can be highly charged because the resin amount is reduced, the abrasion resistance is improved by an effect of improving the hardness of the product surface and an effect of reinforcing the resin portions, and the phenolic resin molding material is suitably used to form the sliding parts to be used under lubrication with oil or water.

### Brief Description of the Drawing

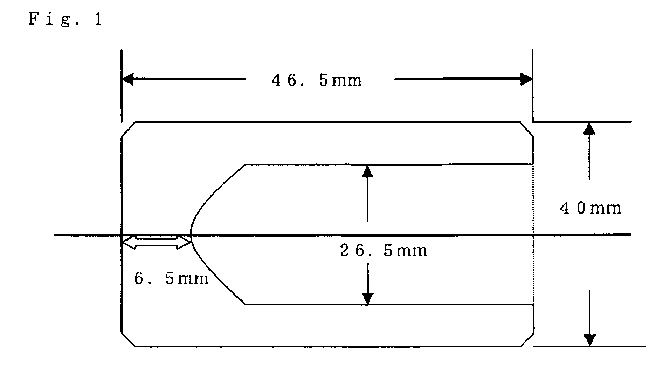

Fig. 1 is a diagram showing a shape of a piston model for a thermal shock test.

### Best Mode for carrying out the Invention

The phenolic novolakused in the present invention has 10% or less, preferably 5% or less, of a total content of a monomeric phenol and a dimeric phenol when measured by the area method of gel filtration chromatography.

The phenolic novolakused in the present invention has a degree of dispersion (Mw/Mn) of a weight-average molecular weight (Mw) and a number-average molecular weight (Mn) of 1.1 to 3.0, preferably 1.5 to 2.0, when measured by gel filtration chromatography. The weight-average molecular weight (Mw) is not particularly restricted but preferably 800 to 3700, and more preferably 900 to 3500.

The phenolic novolak used in the present invention is not particularly restricted but can be produced by, for example, a production method having a step of conducting a heterogeneous reaction between a phenol and 0.80 mol to 1.00 mol or less of an aldehyde per mol of the phenol in the presence of 5 parts by mass or more of a phosphoric acid per 100 parts by mass of the phenol.

Specifically, it is essential to use a phenol and an aldehyde as raw materials and a phosphoric acid as an acid catalyst, and a two-phase separated state formed of them is stirred for mixing by mechanical stirring, ultrasonic wave or the like, to proceed a reaction between a phenol and an aldehyde in a cloudy heterogeneous reaction system with the two phases (an organic phase and a water phase) in a mixed state to synthesize a condensate (resin). Then, for example, a water-insoluble organic solvent (e.g., methyl ethyl ketone, methyl isobutyl ketone or the like) is added and mixed to dissolve the condensate, the stirring for mixing is stopped, and the mixture is left standing so to separate into an organic phase (organic solvent phase) and a water phase (aqueous phosphoric acid solution phase). Then, the water phase is removed for recovery, while the organic phase is washed with hot water and/or neutralized and recovered by distillation. Thus, the phenolic novolak can be produced.

Examples of the phenol used as the raw material are phenol, cresol, xylenol, butylphenol and phenylphenol. Meanwhile, examples of the aldehyde are formaldehyde, formalin, paraformaldehyde and acetaldehyde. These raw materials are not limited to the specified ones and may be used alone or as a combination of two or more.

When the blending ratio (F/P) of the aldehyde (F) and the phenol (P) is in a range of 0.80 to 1.00 or less according to the mole standard, the phenolic novolak used in the present invention can be produced at a high yield.

The phosphoric acid used as the acid catalyst play a significant role to provide a phase separation reaction with the phenol in the presence of water, so that an aqueous solution type, for example, 89% by mass phosphoric acid, 75% by mass phosphoric acid or the like, is preferably used and, for example, polyphosphoric acid, anhydrous phosphoric acid or the like may be used if necessary.

The blending amount of the phosphoric acid is very influential on the control of a phase separation effect but, generally, 5 parts by mass or more, preferably 25 parts by mass or more, and more preferably 50 parts by mass or more, to 100 parts by mass of phenol. If the blending amount is less than 5 parts by mass, a low-molecular weight component is not reduced but the production of a high-molecular weight component is promoted. Therefore, the breadth of the molecular-weight distribution tends to become extensive. Where 70 parts by mass or more of phosphoric acid is used, it is desirable to secure safety by suppressing heat generation in the early stage of reaction by split-charging to the reaction system.

To promote the phase separation reaction, a nonreactive oxygen-containing organic solvent is preferably used as a reaction cosolvent. As the reaction cosolvent, it is preferable to use at least one selected from the group consisting of an alcohol, a polyalcohol-based ether, a cyclic ether, a polyalcohol-based ester, a ketone and a sulfoxide.

Examples of the alcohol are monohydric alcohol such as methanol, ethanol or propanol, dihydric alcohol such as butanediol, pentanediol, hexanediol, ethylene glycol, propylene glycol, trimethylene glycol, diethylene glycol, dipropylene glycol, triethylene glycol, tripropylene glycol or polyethylene glycol, trihydric alcohol such as glycerin, and the like.

Examples of the polyalcohol-based ether are glycol ethers such as ethylene glycol monomethyl ether, ethylene glycol monoethyl ether, ethylene glycol monopropyl ether, ethylene glycol monobutyl ether, ethylene glycol monopentyl ether, ethylene glycol dimethyl ether, ethylene glycol ethylmethyl ether and ethylene glycol monophenyl ether.

Examples of the cyclic ether are 1,3-dioxane, 1, 4-dioxane and the like, examples of the polyalcohol-based ether are glycol esters such as ethylene glycol acetate, examples of the ketones are acetone, methyl ethyl ketone, methyl isobutyl ketone and the like, and examples of the sulfoxide are dimethyl sulfoxide, diethyl sulfoxide and the like.

Among them, methanol, ethylene glycol monomethyl ether, polyethylene glycol and 1,4-dioxane are particularly desirable.

The reaction cosolvents are not limited to the above-described examples but solid types can also be used if they have the above-described properties and are in a state of liquid at the time of the reaction. And, they can be used alone or as a combination of two or more. The reaction cosolvent is not limited to a particular blending amount but used in 5 parts by mass or more, and preferably 10 to 200 parts by mass, per 100 parts by mass of phenol.

An amount of water in the reaction system has an effect on a phase separation effect and a production efficiency but is generally 40% or less according to the mass standard. If the amount of water exceeds 40%, there is a possibility that the production efficiency decreases.

A reaction temperature between the phenol and the aldehyde is significant to enhance the phase separation effect and generally 40°C to a reflux temperature, preferably 80°C to a reflux temperature and more preferably a reflux temperature. If the reaction temperature is less than 40°C, the reaction time becomes very long, and the low-molecular weight component cannot be reduced. The reaction time is variable depending on the reaction temperature, blending amount of phosphoric acid, a moisture content in the reaction system and the like but generally about 1 to 10 hours. As a reaction environment, normal pressure is suitable, but the reaction may be made under pressure or under a reduced pressure if the heterogeneous reaction which is a feature of the present invention is maintained.

The inorganic filler used in the present invention is not limited to particularly one, but any of those contained in the conventional phenolic resin molding materials can be used. For example, calcium carbonate, clay, talc, silica, aramid fiber, carbon fiber, glass fiber and the like can be used and may be used solely or as a combination of two or more. It is desirable to use the glass fiber together with another inorganic filler.

The blending amount of the inorganic filler is 350 to 900 parts by mass, preferably 400 to 800 parts by mass, to 100 parts by mass of the phenolic novolak and preferably contains 100 to 200 parts by mass of glass fiber in order to improve mechanical strength and heat resistance. If the inorganic filler is less than 350 parts by mass, the shrinkage percentage becomes high, so that the dimensional accuracy tends to become low, and if it is larger than 900 parts by mass, the fluidity degrades, resulting in a problem that the injection moldability becomes poor. Thus, the blending amount falling outside of the above-described range is not desirable.

The inorganic fibrous filler used in the present invention is not limited to a particular one. Among the above-described inorganic fillers, fibrous ones and also various types of carbon fibers such as pitch-based and PAN-based fibers, fibrous fillers of wollastonite, potassium titanate and aluminum borate, and the like can be used. But, it is desirable that the wollastonite is selected to improve the abrasion resistance and heat resistance and the glass fiber is selected to improve the mechanical strength and heat resistance and not to degrade the abrasion resistance, and they are combined. This combination is also desirable in view of the cost performance.

The blending amount of the inorganic fibrous filler is 450 to 900 parts by mass, preferably 600 to 800 parts by mass, to 100 parts by mass of the phenolic novolak. A combination of the wollastonite and the glass fiber is more preferable, and the wollastonite is used in 350 to 800 parts by mass, preferably 450 to 700 parts by mass, and the glass fiber is used in 100 to 200 parts by mass, preferably 110 to 150 parts by mass. If the inorganic fibrous filler is less than 450 parts by mass, the resin amount increases, so that the abrasion resistance degrades, and a coefficient of linear expansion becomes high. Therefore, the thermal shock property (heat resistance) by a sharp change in temperature tends to degrade. And, if the inorganic fibrous filler is more than 900 parts by mass, there are problems that the fluidity becomes poor, and it is difficult to secure the stable moldability. Thus, the blending amount falling outside of the above-described range is not desirable.

To the phenolic resin molding material of the present invention can be added various types of additives, which are conventionally used for the phenolic resin molding material, for example a curing agent such as hexamethylenetetramine, a mold release agent such as calcium stearate or zinc stearate, a curing accelerator such as magnesium oxide, a coupling agent, a solvent and the like as desired.

A method of producing the phenolic resin molding material of the present invention is not limited a particular one, but it is produced by pulverizing a kneaded product, which is obtained by kneading with heat applied by a pressure kneader, a biaxial extruder, a Henschel mixer, a mixing roll or the like, by a power mill or the like. And, the obtained molding material can be applied to each of the injection molding, transfer molding and compression molding.

Reasons why the molding material of the present invention has outstanding moldability, heat resistance, dimensional accuracy and mechanical strength and also good abrasion resistance are considered that melt viscosity of the molding material at the time of kneading can be lowered by using the phenolic novolakwhich has phenol monomer and dimer components in a small amount and a small degree of dispersion; thus, the ratio of the resin component in the molding material is decreased to a lower level, and the ratio of the inorganic filler can be relatively increased than before.

Especially, products formed of the molding material having the fibrous filler blended as the inorganic filler of the present invention are good in dimensional accuracy because the organic component susceptible to an influence of heat is small and satisfactory in a variable temperature environment because a coefficient of thermal expansion is small. When they actually slide, they exhibit outstanding abrasion resistance under lubrication with oil or water because the organic component which causes an abrasion phenomenon is small in amount.

### Examples

Examples of the present invention will be described specifically, but it is to be understood that the present invention is not restricted by the examples. In the examples, "parts" and "%" denote "parts by mass" and "% by mass" unless otherwise specified.

[Production of phenolic novolak (1)]
In a reactor provided with a thermometer, a stir device and a condenser were charged 193 parts of phenol (P), 57 parts of 92% paraform (F) (F/P=0.85), 116 parts of 89% phosphoric acid (60%/P), and 96.5 parts of ethylene glycol (50%/P). They were mixed by stirring to produce a whitish state (two-phase mixture), which was gradually raised to a reflux temperature, and a condensation reaction was conducted at the same temperature for 10 hours. Then, methyl isobutyl ketone was added while stirring for mixing to dissolve a condensate, the stirring for mixing was stopped, and the content was moved into a separating flask and left standing to separate into a methyl isobutyl ketone solution phase (upper phase) and a phosphoric acid solution phase (lower phase) . Then, the phosphoric acid solution phase was removed, and the methyl isobutyl ketone solution was washed with water several times to remove the phosphoric acid. Then, the content was moved back into the reactor, and the methyl isobutyl ketone was completely removed by vacuum distillation to obtain 213.5 parts of phenolic novolak (1).

[Production of phenolic novolak (2)]
In a reactor provided with a thermometer, a stir device and a condenser were charged 193g of phenol, 142g of 37% by mass formalin (F/P=0.85) and 0.97g of oxalic acid (0.5%/P), a temperature was gradually raised to a reflux temperature (98 to 102°C), a condensation reaction was conducted at the same temperature for six hours, and vacuum concentration was made to obtain 199g of phenolic novolak (2) (yield of 103%/P).

[Properties of phenolic novolak]
The properties of the obtained phenolic novolakwere measured by the following test methods. The results are shown in Table 1.

(I) Degree of dispersion
Using Tosoh Corporation's gel filtration chromatography SC-8020 series build-up system (column: G2000Hₓ₁+G4000Hₓ₁, detector: UV 254 nm, carrier: tetrahydrofuran 1 ml/min, column temperature: 38°C), a weight-average molecular weight (Mw) and a number-average molecular weight (Mn) were determined in terms of standard polystyrene equivalent, and a degree of dispersion (Mw/Mn) was calculated.

(II) a monomeric phenol and a dimeric phenol contents (%)
The areas of the monomeric phenol and the dimeric phenol to the total area of molecular weight distribution were measured by the area method which indicates in percentage.

**[Table 1]**

| | Phenolic novolak (1) | Phenolic novolak (2) |
|---|---|---|
| Number-average molecular weight(Mn) | 755 | 512 |
| Weight-average molecular weight(Mw) | 1227 | 3842 |
| Degree of dispersion (Mw/Mn) | 1.63 | 7.5 |
| Monomeric phenol content(%) | 0.3 | 9.1 |
| Dimeric phenol content(%) | 3.3 | 8.4 |

<Example 1>
As shown in Table 2, 100 parts of phenolic novolak (1), 133 parts of glass fiber (a product of Nippon Electric Glass Co. , Ltd. , reference fiber diameter: 10 *µ*m, average fiber length: 3 mm) and 433 parts of fused silica (a product of Denki Kagaku Kogyo K.K., FS-90) as inorganic fillers, 12 parts of hexamethylenetetramine and 13 parts of a mold release agent and others were blended and mixed uniformly. Then, the mixture was kneaded uniformly into a sheet form under heating by heated rolls, cooled, and crushed by a power mill to obtain a granular molding material.

The obtained molding material was injection-molded under the following conditions to obtain a JIS bending test specimen (80×10×4 mm).

Cylinder temperature: front 85°C, rear 40°C
Mold temperature: 175°C
Curing time: 60 seconds

The obtained test specimen was subjected to after-curing at 180°C for 3 hours, and its shrinkage percentage, bending strength and shrinkage percentage after boiling for 24 hours were evaluated. And, a long-term heat resistance test was further conducted at 250°C for 500 hours. The results are shown in Table 2. Various properties were evaluated according to the following.

(1) Shrinkage percentage
Measured according to JIS K 6911.

(2) Bending strength
Measured according to JIS K 7203.

< Example 2, Comparative Examples 1 to 3>
Molding materials were produced in the same way as in Example 1 except that the blending ratios were changed as shown in Table 2, and evaluation was conducted. The results are shown in Table 2. Comparative Example 2 had poor roll workability, and a molding material could not be obtained.

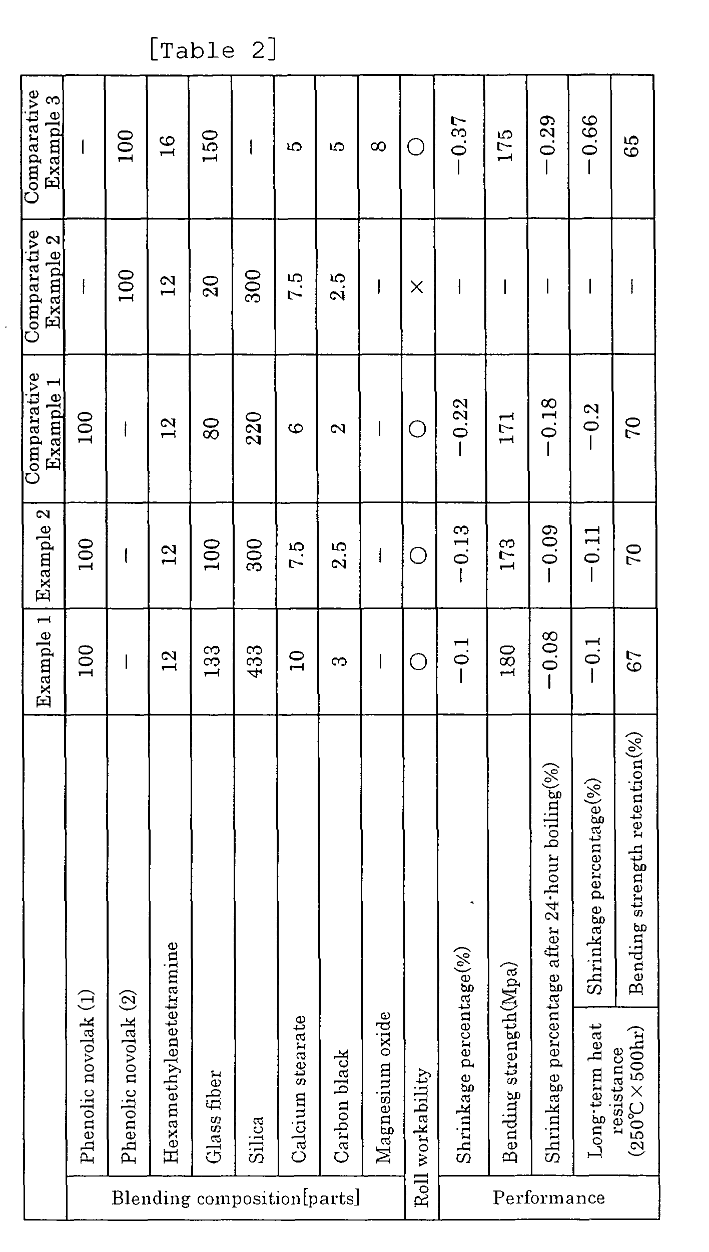

It is apparent from Table 2 that the phenolic resin molding materials obtained in Examples 1 and 2 had a remarkable low shrinkage percentage and also well-balanced properties of strength and heat resistance.

< Examples 3, 4, Comparative Examples 4 to 6>
Molding materials were produced in the same way as in Example 1 except that the blending ratios were changed as shown in Table 3. The used inorganic fibrous fillers are as follows:
Wollastonite (a product of TOMOE Engineering Co., Ltd., NYAD 400, reference fiber diameter: 7µm, aspect ratio: 4)
Glass fiber (a product of Nitto Boseki Co., Ltd., reference fiber diameter: 11 *µ*m, average fiber length: 3 mm)

Comparative Example 5 had poor roll workability, and a molding material could not be obtained.

The obtained molding materials were injection-molded under the same conditions as in Example 1 to obtain JIS shrink test specimens, JIS bending test specimens (80X10X4 mm), and abrasion testing ring test specimens. They were subjected to after-curing at 210°C for 20 hours and evaluated for the following properties. The results are shown in Table 3.

(1) Bending strength
Measured according to JIS K 7203.

(2) Thermal shock
The piston model having the dimensions and shape shown in Fig. 1 was heated at 300°C for 30 minutes, immediately removed and put under water of 23°C, and test specimens were examined for their appearances. This procedure was repeated for five cycles. After the five cycles, the test specimens free from a crack were determined to be good.

(3) Resistance to hot water
JIS shrink test specimens were immersed in hot water of 80°C for 500 hours, and dimensional change rates after the immersion were measured.

(4) Abrasion resistance
The test was conducted under the following conditions, and the abrasion testing ring test specimens and counterpart materials were measured for abrasion wear.
Test load: 60 kg/cm²
Test rate: 0.1 m/s
Test time: 2 hours
Counterpart material: FCD450
Test environment: Under brake oil (normal temperature)

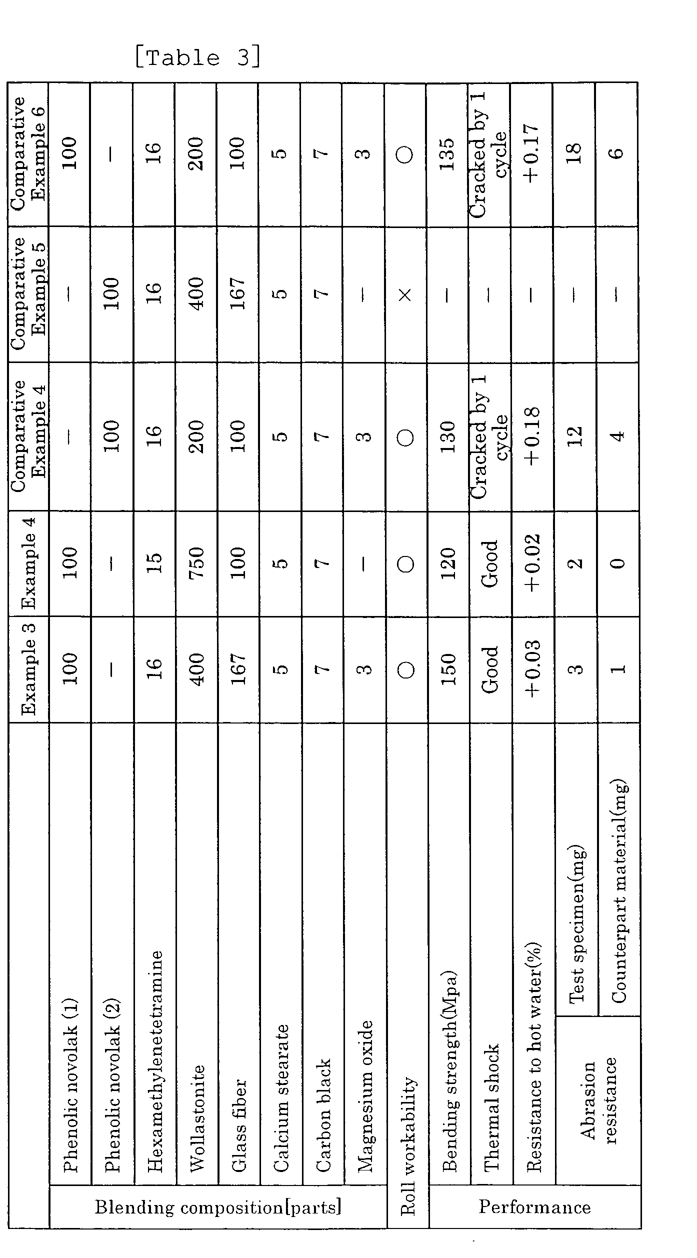

It is apparent from Table 3 that the phenolic resin molding materials obtained in Examples 3 and 4 have well-balanced properties of heat resistance (thermal shock resistance), abrasion resistance, dimensional accuracy and mechanical strength.

## Claims

1. A phenolic resin molding material, comprising blending 350 to 900 parts by mass of an inorganic filler with 100 parts by mass of a phenolic novolakin that a total content of a monomeric phenol and a dimeric phenol is 10% or less when measured by the area method of gel filtration chromatography and a degree of dispersion (Mw/Mn) of a weight-average molecular weight (Mw) and a number-average molecular weight (Mn) is 1.1 to 3.0 when measured by gel filtration chromatography.

2. The phenolic resin molding material according to claim 1, wherein the inorganic filler contains 100 to 200 parts by mass of glass fiber.

3. The phenolic resin molding material according to claim 1 or 2, wherein a total content of a monomeric phenol and a dimeric phenol is 5% or less.

4. The phenolic resin molding material according to any of claims 1 to 3, wherein the phenolic novolakis obtained by a heterogeneous reaction of a phenol and 0.80 mol to 1.00 mol or less of an aldehyde per mol of the phenol in the presence of 5 parts by mass or more of a phosphoric acid per 100 parts by mass of the phenol.

5. The phenolic resin molding material according to any of claims 1 to 4, wherein the inorganic filler is an inorganic fibrous filler, and the blending amount of the inorganic fibrous filler is 450 to 900 parts by mass.

6. The phenolic resin molding material according to claim 5, wherein the inorganic fibrous filler is a combination of wollastonite and glass fiber, the blending amount of the wollastonite is 350 to 800 parts by mass, and the blending amount of the glass fiber is 100 to 200 parts by mass.

7. A resin sliding part used under lubrication with oil or water, which is formed of the phenolic resin molding material according to claim 5 or 6.
